# EUROPEAN PATENT SPECIFICATION

(11) **EP 1 308 022 B1**
(45) Date of publication and mention of the grant of the patent: **29.04.2009**
(21) Application number: 01960774.6
(22) Date of filing: 09.07.2001
(51) Int. Cl.: H04M 3/42

(54) **METHOD FOR OFFERING A SERVICE NUMBER CALL WITH A PREDEFINED PRICE FOR A SUBSCRIBER OF A MOBILE TERMINAL**
VERFAHREN ZUM ANBIETEN VON EINEM DIENSTNUMMERANRUF MIT EINEM VORBESTIMMTER PREIS FÜR EINEN TEILNEHMER VON EINEM MOBILEN ENDGERÄT
PROCEDE PERMETTANT DE FOURNIR UN NUMERO DE SERVICE A UN ABONNE D'UN TERMINAL MOBILE A UN PRIX PREDEFINI

(30) Priority: 11.07.2000 FI 20001649
(43) Date of publication of application: 07.05.2003
(73) Proprietor: Elisa Oyj, 00520 Helsinki (FI)
(72) Inventor: ISOTALO, Lauri, FIN-00830 Helsinki (FI)
(74) Representative: Tiilikainen, Jarkko Tapio
(86) International application number: PCT/FI2001/000654
(87) International publication number: WO 2002/005531

(56) References cited:
- EP-A1- 0 873 026
- EP-A1- 1 045 609
- EP-A2- 0 952 723
- US-A- 5 550 899
- US-A- 5 694 459

## Description

The present invention relates to a method, according to the preamble of Claim 1, for providing a mobile subscriber with a service-number call at a predefined tariff.

Methods of this kind are used, or a method of this kind is used to provide a mobile subscriber with a service number.

The state of the art includes service numbers, the tariff for which is predefined. The term tariff refers to the payment that is billed to the subscription calling the service number. The tariff can be based on the duration of the call, or can be a flat rate per call, or can be a combination of both. The tariff can also be zero, in which case the service is free. Examples of such service numbers are directory enquiries services, vehicle register services, entertainment services, and the free service numbers of companies. In the case of free service numbers, calls coming to the service number are billed to the provider of the service number, for example, to the company concerned. The term service number subject to a charge refers to a service number, the tariff for which is other than zero.

A drawback of the state of the art is that calls made from abroad, such as calls from mobile stations, are generally not connected to service numbers subject to a charge, as the additional tariff for the service cannot then be billed to the calling subscription, because in international calls, charging data (for instance, units) is not transmitted between different countries. For this reason, calls coming from abroad are, in practice, always blocked in the intelligent-network control logic of service numbers subject to an additional tariff, to prevent access to these services, without an additional tariff. This arrangement often causes problems for people who travel abroad a great deal and who are accustomed, in their own country, to use various services subject to an additional tariff to acquire Information, such as travel information, timetable information, and expert services. This problem also concerns mobile subscribers, whose mobile subscription is connected to the mobile network of a mobile operator other than the subscriber's own mobile operator, i.e. the home operator. In other words, even mobile subscribers who are abroad, and call from their domestic mobile subscription, cannot call service numbers, which are subject to a charge, in their home country.

In the case of free service numbers, the problem arises that customers calling from abroad must pay the call expenses relating to the call being connected from the network of the foreign operator to the domestic telephone network. This problem too affects mobile subscribers, whose mobile subscription is connected to the mobile network of a mobile operator other that the mobile subscriber's own mobile operator, i.e. the home operator. In other words, mobile subscribers who are abroad must also pay for a call connection to their own country when calling from a domestic mobile subscription. Due to this, entities providing free service numbers have the problem of not being able to provide free service numbers to customers who are abroad.

EP-A-0 952 723 discloses a telephone directory system with a call completion feature, and a corresponding method for providing a call connection as a response to a call creation request and using the information in the telephone directory system.

The invention is intended to create an entirely new type of method, by means of which a mobile subscriber, whose mobile subscription is connected, to the mobile network of an operator other than the mobile subscriber's home operator, can be provided with a service number subject to a predefined tariff.

The invention is based on that a call connection, between a customer's mobile station that is connected to a mobile network other than that of the mobile subscriber's home operator, and some other telephone device, is formed by the action of the mobile operator, on the basis of a request by the customer. If a customer wishes a connection to some number, they send a connection creation request, e.g. in the form of a fixed form SMS short message, ro a number given by the mobile operator. This request contains the number, to which the customer wishes a connection. After having received the request, the equipment of the mobile operator calls the customer's mobile station. Once the customer has answered the call, the equipment of the mobile operator calls the connection stated in the customer's request Once this call has been answered, the equipment of the mobile operator links the call connections in such a way that a call connection is formed between the customer's mobile station and the desired subscription. The mobile operator identifies the customer on the basis of the request, so that if necessary, the mobile operator can bill the subscriber for the call. Charging can also be implemented by billing the service number provider for all the expenses relating to the call connection, or for part of the expenses relating to the call connection. The service provider can also be billed for the expense arising from the connection creation request, e.g., from the sending of the SMS short message.

More specifically, the method according to the invention is characterized by what is stated in the characterizing portion of Claim 1.

Considerable advantages are gained with the aid of the invention.

With the aid of the invention, mobile subscribers can be provided with service numbers that are free, or subject to a charge, a connection to which can also be formed, for example, when the subscribers are abroad.

With the aid of the invention, mobile subscribers can be provided with a service number, which is, for instance, free even when called from abroad. The mobile operator can, for example, provide corporate customers with an opportunity to offer free service numbers, which are free to the mobile subscriber, even when calling from abroad. If a corporate customer agrees to pay the expenses of calls made from abroad, the mobile operator can bill the corporate customer for the call connection, instead of billing the mobile subscriber.

In addition, the invention also permits calls to service numbers subject to a charge and the provision of service numbers subject to a charge, for example, to mobile subscribers abroad. With the aid of the method, when a connection is made from abroad, service numbers can, for example, be priced so that the tariff billed to the mobile subscriber is always the same amount, independent of in which country and/or within which mobile operator's network the mobile subscriber's subscription may be located. The mobile subscriber then gains the advantage that the price of the service number does not vary according to the location of the mobile subscriber.

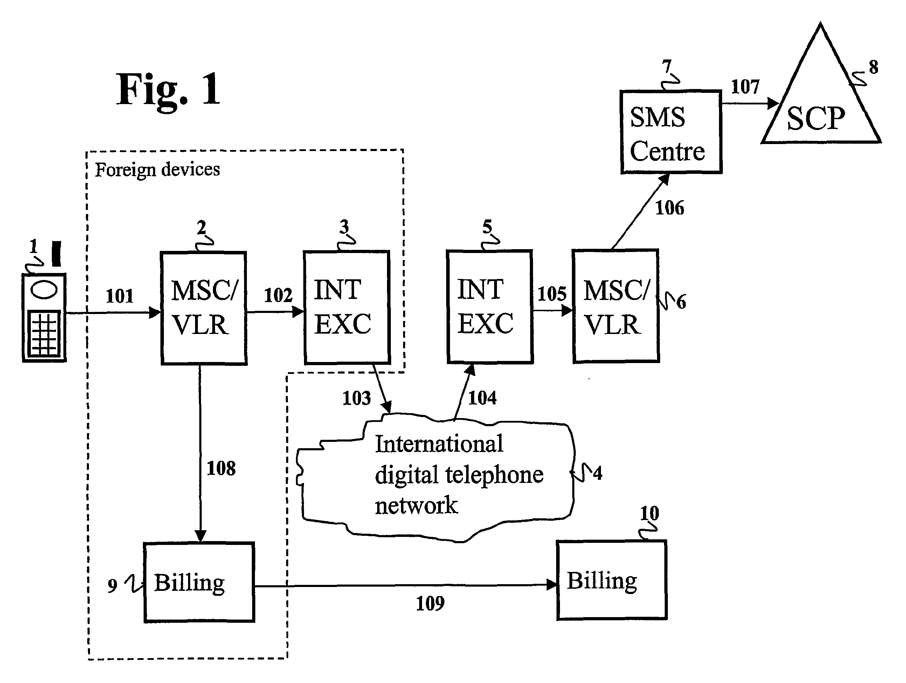

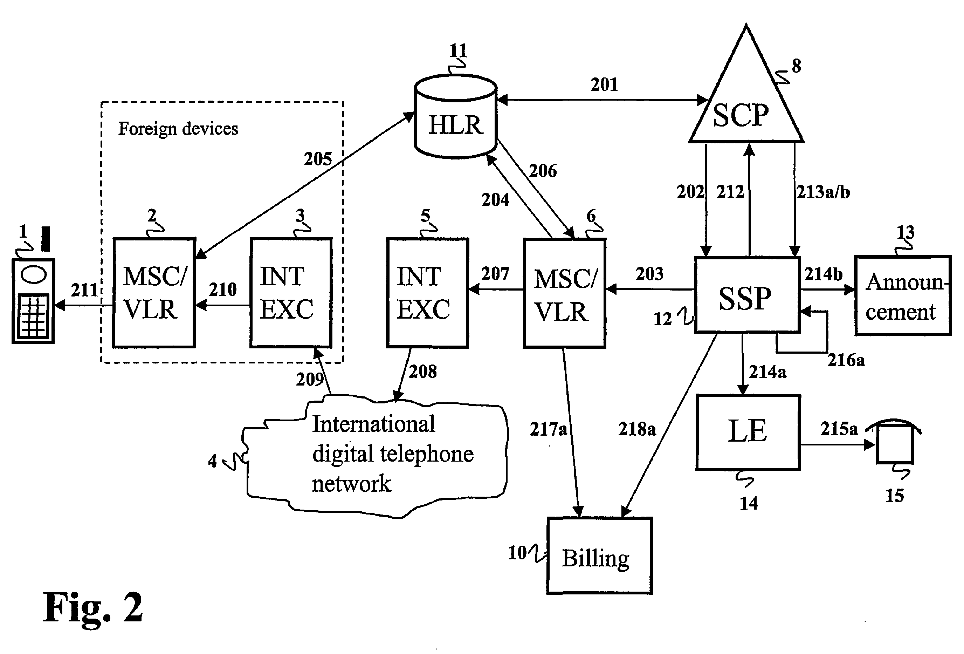

In the following, the invention is examined with the aid of an example and with reference to the accompanying drawings. In the example, the method is divided into two sub-methods, which together form a totality acting as an example of the application of the invention. The sub-methods are shown in Figures 1 and 2.

In this application, the term domestic mobile operator refers to the mobile operator, with which the mobile subscriber has made a mobile subscription agreement. The domestic mobile operator is thus the entity that provides the mobile subscriber with mobile services and bills the mobile subscriber for these services. The term foreign mobile operator refers, in the example, to a mobile operator with which the domestic mobile operator has made a co-operation agreement, for instance, a roaming agreement. On the basis of the co-operation agreement, the foreign mobile operator can, at the request of the mobile subscriber, or of the mobile station of the mobile subscriber, connect the customer's mobile subscription to the mobile network of the foreign mobile operator. The foreign mobile operator then bills the domestic mobile operator for the mobile services used by the mobile subscriber while the domestic mobile operator in turn bills the mobile subscriber for them. Through the agreement, the domestic mobile operator can provide its customers with an opportunity to use their mobile stations when abroad, though at a higher price than domestic services. Thus, the term foreign mobile operator need not refer to a foreign-owned mobile operator, or one that operates abroad, nor, correspondingly, need the term domestic mobile operator refer to a domestically-owned mobile operator, or one that operates in the home country. The term visited operator could also be used for a foreign mobile operator and, correspondingly, the term home operator for a domestic mobile operator.

For reasons of clarity, the operation of the digital mobile network, for example, a GSM or UMTS network, is not examined in detail in the example. If the invention is implemented in a GSM network, several network elements, which are not referred to in the example, are connected to the totality. Such elements are, for example, a GMSC (Gateway Mobile Switching Centre), a BSC (Base Station Controller), and a BSS (Base Station System). The structure and operation of the international digital telephone network are also not described. The details of the operation and implementation of these networks are not essential from the point of view of the invention. In addition, one versed in the art can be assumed to be familiar with the operation, implementation, and use of the relevant networks, and with their application to the extent required by the invention.

Joint operation of the service number and mobile operator's billing system, implemented with the aid of the embodiment of the invention, can be realized in several different ways. The example shows one manner of implementation, which is based on the use of so-called tickets to transmit charging bases. The term ticket refers to a fixed-form data packet, which contains data relating to the event in question, such as time, duration, price, and title of the service used.

In the example, the following internationally recognized abbreviations are used:
- MSC: Mobile Switching Centre
- SCP: Service Control Point
- SSP: Service Switching Point
- HLR: Home Location Register
- VLR: Visiting Location Register
- LE: Local Exchange
- BCSM: Basic Call State Model
- FCI: Furnish Charging Information.

Figure 1 shows a block diagram of a mobile subscriber's request to create a call connection, made using an SMS short message, and the operations relating to its processing.
Figure 2 shows a block diagram of the creation of the call connection requested by the mobile subscriber, and the related operations.

The system shown in Figure 1 includes the foreign operator's MSC 2, which is linked to a VLR, a foreign traffic centre 3 abroad, a mobile station 1 of a mobile subscriber in the coverage area of the MSC 2, a domestic foreign traffic centre 5, an international digital telephone network 4 connecting the foreign centres 3 and 5, a domestic operator's MSC 6, the domestic operator's SMS short-message centre 7, the domestic operator's SCP 8, the foreign operator's billing system 9, and the domestic operator's billing system 10.

When processing, by means of the method according to Figure 1, a call connection creation request sent in an SMS short message form by a mobile subscriber, the following operations are carried out:
101. The mobile subscriber uses their mobile station to send an SMS short message to the number stated by the domestic mobile operator, as a result of which the mobile station 1 sends an SMS short message to the MSC 2 of the foreign operator. The SMS short message can contain, for example, a command and the destination number, to which the mobile subscriber wishes a connection.
102. The MSC 2 sends an SMS short message in a signalling channel to the foreign traffic centre 3 of a suitable foreign operator.
103. and 104.
   The foreign traffic centre 3 sends the SMS short message to the foreign traffic centre 5 of the domestic mobile operator, through the international digital telephone network 4.
105. The foreign traffic centre 5 sends the SMS short message to the MSC 6 of the domestic operator.
106. The MSC 6 sends the SMS short message to an SMS short message centre 7.
107. The SMS short message centre 7 sends an SMS short message to an SCP 8. The SCP 8 picks the destination number, to which the mobile subscriber wishes a connection, from the contents of the short message. The SCP 8 also obtains the mobile subscriber's A-subscriber number identity, i.e. the telephone number of the mobile subscriber's mobile subscription, from the header data of the SMS short message.
108. The MSC 2 of the foreign mobile operator makes a billing ticket for the sending of the SMS short message and sends it to the billing system 9 of the foreign mobile operator, which records the ticket.
109. The billing system 9 of the foreign mobile operator sends the information of the mobile services used by the mobile subscriber to the billing system 10 of the domestic mobile operator and bills the domestic operator for the mobile services used by the mobile subscriber. The billing system 10 of the domestic mobile operator records the information it receives and adds the billing information to the billing account of the mobile subscriber. The mobile subscriber is billed on the basis of the billing account.

The system shown in Figure 2 includes, as in Figure 1, an MSC 2 of a foreign operator, in connection with which there is a VLR, a foreign traffic centre 3 abroad, the mobile subscriber's mobile station in the coverage area of the MSC 2, a domestic foreign traffic centre 5, the international digital telephone network 4 connecting the foreign centres 3 and 5, the domestic operator's MSC 6, the domestic operator's SCP 8, and the domestic operator's billing system 10. In addition to these devices, the system of Figure 2 includes the domestic mobile operator's HLR 11, SSP 12, and announcement equipment 13, as well as the telephone network's LE 14 and the telephone device 15 of a subscriber of the telephone network.

When using the method according to Figure 2 to create a call connection requested by a mobile subscriber, the following operations are carried out:
201. The SCP compares the received destination number of the call connection creation request with the data in the database. The SCP then detects whether the destination number is a service number, the service provider of which has agreed to pay part or all of the expenses involved in making contact with the service number. The SCP 8 retrieves data from the HLR concerning to which foreign mobile operator's mobile network the mobile station of the mobile subscriber is connected to, and whether the mobile subscriber has switched on a service block to service numbers subject to a charge.
202. The SCP 8 sends the SSP 12 an ICA (Initiate Call Attempt) message and a Continue message. The telephone number of the mobile subscriber is given in the Destination-Routing-Address field of the header of the ICA message and at the same time the SCP 8 commands the SSP 12 to set an EDP (Event Detection Point)in the RRB (Request Report BCSM) format to monitor the answer sign of the mobile subscriber. A detection point DP7-R (Detection Point 7 - Request) can be used for this purpose. If the destination number is a service number, the provider of which has agreed to also pay the expenses arising from the sending of a connection creation request, the following operations are also carried out: the SCP orders a ticket by sending the SSP 8 an FCI message defining the ticket. On the basis of the ticket, the billing system bills the service provider for the expenses arising from the call connection creation request, e.g. the expenses for sending an SMS-message from abroad. In addition, the SCP orders another ticket, on the basis of which the expenses arising from the call connection creation request are deleted from the customer's billing account, such as the expenses arising from the sending of the SMS short message from abroad. By means of this ticket, the ticket made previously (in operation 109) is cancelled. The ticket can include identification data, on the basis of which it can be linked to the ticket sent previously (in operation 109).
203. The SSP 12 sends, on the basis of the ICA message, a procedure call to the MSC 6 of the domestic mobile operator. (At this stage, reverse-charge calls can be separated from the other calls coming from the mobile subscriber, for example, by adding some prefix to the call number originating from the SSP 12, or by altering some other field in the initiation address message. In that case, the MSC 6 of the domestic mobile operator can identify and ticket the call, so that it becomes free of charge in the billing system from the point of view of the mobile subscriber, or in such a way that it is billed at some other rate, or on some other basis than is the practice in the case of receiving normal calls abroad.)
204. The MSC 6 sends a query to the HLR 11 to determine the so-called roaming number of the mobile subscription. On the basis of the roaming number, the call can be routed to the mobile subscriber's mobile subscription in the network of the foreign mobile operator.
205. The HLR 11 sends a query to the VLR of the foreign mobile operator's MSC 2, in the area of which it knows the mobile subscriber's mobile station to be. The VLR responds to the HLR 11 by providing the mobile subscriber's roaming number.
206. The HLR 11 sends the mobile subscriber's roaming number to the domestic mobile operator's MSC 6.
207. On the basis of the roaming number of the mobile subscription, the domestic mobile operator's MSC 6 channels the call connection to a suitable foreign centre 5.
208. and 209.
   The domestic foreign traffic centre 5 channels the call connection further through the international digital telephone network 4 to the foreign traffic centre 3 abroad.
210. The foreign traffic centre 3 abroad channels the call connection further to the foreign mobile operator's MSC 2.
211. On the basis of the data in the VLR, the foreign mobile operator's MSC 2 channels the call connection to the mobile subscriber's mobile station 1, through the correct BSC and BSS. When the mobile subscriber answers the call, an answer signal is transmitted back to the home country, as far as the SSP 12.
212. The SSP 12 reports, by means of an ERB message (Event Report BCSM), to the SCP 8 that the mobile subscriber has answered.

If the destination number is a service number subject to a charge, either operations 213a-219a, or 213b and 214b are carried out, depending on whether the mobile subscriber has switched on a service block for service numbers subject to a charge, or not. Operations 213a - 219a are carried out, if the service block for service numbers subject to a charge is not switched on. Operations 213b and 214b are carried out, if the customer has switched on the service block for service numbers subject to a charge.
213a) The SCP 8 sends the SSP 12 a call connection operation (Connect), which includes information on the mobile subscriber's mobile subscription number (calling subscriber number) and the destination number, to which the mobile subscriber wishes a connection.
214a) On the basis of the call connect operation, the SSP 12 channels the call connection to the domestic LE 14. (The mobile subscriber's mobile subscription number, i.e. calling subscriber number, can be transmitted to the LE in connection with the creation of the call connection.)
215a) The LE 14 connects the call connection coming from the SSP to the telephone device of the telephone network subscriber, on the basis of the destination number. Once the telephone device 15 has answered the transmitted call, notification of this is sent to the SSP. The telephone network subscriber can be, for instance, the service number's service provider. (In connection with the creation of the call connection, the mobile subscriber's mobile subscription number, i.e. calling subscriber number, can be transmitted to the telephone device 15.)
216a) The SSP 12 forms a call connection between the domestic subscriber's telephone device 15 and the mobile station 1 of the mobile subscriber who is abroad. It is possible to send an FCI message defining a ticket to the SSP, during this procedure as well.
217a) The MSC 6 creates a ticket or several tickets from the call connection and sends them to the billing system 10, which records the information relating to the ticket. If the destination number is a free service number, a single ticket is made, on the basis of which the provider of the service number is billed for the call connection. If the destination number is a service number subject to a charge, a ticket is made, or tickets are made, on the basis of which the mobile subscriber and/or the provider of the service number are/is billed for the call connection. The price of the tickets can depend, for example, on the duration of the call connection.
218a) If the call connection is to a service number subject to a charge, the SSP 12 creates a ticket for the use of the service number subject to a charge and sends it to the billing system 10, which records the information relating to the ticket. The ticket is then defined in such a way that the mobile subscriber is billed on the basis of it. The price of this ticket can depend, for example, on the per-call price of the service number, or on the duration of the call connection, and it is based on the predefined tariff for the service number.
219a) (Not shown in the figures.) The billing system 3 records the information it receives and transfers the relevant billings to the billing accounts of the mobile subscriber and/or the provider of the service number. The mobile subscriber and/or the provider of the service number are billed on the basis of the billing accounts. Different billings and their related data can be itemized in the bill.
213b) The SCP 8 sends the SSP 12 a call connection operation (Connect), which contains instructions to create a connection to the signalling device 13.
214b) The SSP 12 creates a connection to the signalling device 13 and links the call connections in such a way that a call connection is formed between the signalling device 13 and the mobile station 1 of the mobile subscriber who is abroad. The announcement device states the reason for the failure of the call, by means of a voice announcement.

Embodiments of the invention, differing from those disclosed above, can also be contemplated. The apparatuses shown in the figures and the examples are not the only technical means with the aid of which an embodiment of the invention can be implemented. The embodiments of the invention can be implemented by means of techniques and systems differing from the figures and examples.

In the example, a connection is formed between the mobile subscriber's mobile station and a telephone device of a fixed telephone network. The method according to the invention can, however, also be used, for instance, to create a call connection between two mobile stations.
The call connection between the mobile subscriber's mobile station 1 and a telephone device 15 of a telephone network can be formed in a manner differing from the example, for instance, in such a way that call is not connected through a local telephone exchange 14, but by using some other technique. The service number provider can be, for example, the relevant domestic mobile operator, in which case the call connection can be connected directly to the equipment of the service-number system.

The call connection being formed can be used not only for voice communication, but also for other purposes, such as data transmission.

An application according to the invention can be implemented with the aid of several different mobile technologies, for example, the UMTS (Universal Mobile Telecommunications System), or GPRS (General Packet Radio Service) technologies. The call connection creation request can be sent, for example, within the framework of WAP (Wireless Application Protocol) technology.

The invention can also be applied in such a way that the mobile subscriber makes a call connection creation request by using their mobile station to call a specific number. In that case, the identification of the mobile subscriber can be carried out with the aid of, for example, a username and password. The mobile subscriber can give their username and password, for example, by keying in the relevant number combinations on their mobile station during the call.

If the mobile subscriber requests the creation of a connection to a service number subject to a charge, despite the fact that the mobile subscriber has switched on a service block for service numbers subject to a charge, the customer can be sent, for example, an SMS short message stating that the connection cannot be created. Notification can also be sent, for example, if the service provider of a free number does not permit calls coming from abroad.

The method can also be applied in such a way that the mobile subscriber states the destination, to which they wish to be connected, in some other way than as a telephone number. The mobile subscriber can, for example, send an SMS short message, which contains a specific command or specific commands and the name of the person or company, to which a connection is desired. On the basis of the name, the mobile operator can retrieve the destination number from a database, for instance. The database can be, for example, a directory enquiries database, from which the desired telephone number can be retrieved on the basis of a name. The destination, to which a call connection is wished, can also be stated in such a way that, for example, the postal address, Web address, e-mail address, or other information relating to the person or company, and on the basis of which the telephone number can be determined with the aid of a database, is stated in addition to, or instead of the name of the person or company. In that case, the mobile subscriber can request the formation of a call connection, for example, by sending an SMS short message, which contains a specific command, or specific commands and/or the Web address of the company to which a connection is desired. In addition, the mobile subscriber can define their own abbreviated dialling codes, which are associated with a telephone number. These abbreviated dialling codes can be saved, for example, in a database maintained by the mobile operator. For example, the mobile subscriber can record their own home number and entitle its code 'home', then the mobile subscriber can form a call connection to their home number by sending a request, which includes the code 'home'.

Within the scope of the invention, it is also possible to contemplate embodiments, in which the mobile operator selects the destination number on the basis of information given by the customer or appearing in other ways and/or of a command given by the customer. For example, the mobile subscriber can send an SMS short message, which contains a specific command and information as to the country in which the mobile subscriber is located. On the basis of this, the mobile operator forms a call connection between the mobile subscriber and the service number, from which information is available on the prices of mobile service in the country in question. Correspondingly, the mobile subscriber can give the name of the foreign mobile operator, to the mobile network of which the mobile subscriber's mobile station is connected, in which case the mobile operator can form a call connection to the corresponding service number. Information on the location of the mobile subscriber, or on the foreign mobile operator being used can also be transmitted, for example, in the header data of, for instance, an SMS short message. The equipment of the mobile operator, for example, the SCP, can also retrieve information form the HLR as to the country in which the relevant mobile subscriber is located, or which foreign mobile operator the subscriber is using. The embodiment can also be implemented in such a way that the call connection creation request can include definitions and/or commands, on the basis of which the mobile operator forms a call connection to a suitable number. The mobile subscriber can, for example, send an SMS short message, which contains the text 'interpreter Spanish', in which case the mobile operator forms a call connection to a Spanish-language interpreter. This service can be of considerable benefit to the mobile subscriber, if, for example, the language barrier is causing problems when dealing with officials.

With the aid of the method, various interfaces can be used to make the service implemented easier for the customer to use. For example, the WAP browser of the mobile station can be utilized to send the connection creation request, in which case the mobile subscriber can be identified with the aid of a username and password, for example. The mobile subscriber can present a connection creation request, for instance, by entering the destination number they desire, or data related to it, in a text field of a WAP page and sending this to the mobile operator, with the aid of the WAP browser of their mobile station.

In addition, the mobile station's interface can, for example, be programmed to send SMS short messages with a specific content, when speed dialling keys are pressed. The interface can also be programmed in such a way that specific information, such as location data or information on the foreign mobile operator being used, is automatically added to SMS short messages sent to the mobile operator.

Some entity other than a mobile operator can also use or provide the method according to the invention.

The invention can also be used with the aid of some other message technology, for example, with the aid of USSD (Unstructured Supplementary Service Data) messages. A connection creation request can be, for example, sent and/or received in the form of, or with the aid of a USSD message.

The example shows one alternative billing procedure, but in the various embodiments of the invention billing can be carried out in different ways. For example, billing can be carried out in such a way that a ticket for the service is made in the MSC, through the operation of the SSP and/or some other device. The mobile operator can implement its billing in a manner differing from the example. The billing system can, for instance, be outsourced, in which case a subcontractor of the mobile operator carries out the operations relating to billing. In the example, the billing information is transmitted to the billing system through tickets. Data communications between the various apparatuses of the mobile system and the billing system can, however, be implemented in a manner differing from the example.

The billing of the mobile subscriber can also take place by sending an FCI message defining the ticket, from the SCP to the SSP in connection with sending an ICA (Initiate Call Attempt) message or a Connect message. The ticket created is transferred to the billing system.

The method can also be used to provide the customer with a connection creation service, in which case the service can be used to provide the customer with an easy way to call their home state using their mobile station. To use the service, the customer only needs to write the number they wish in a short message and send it to a specific number. In addition, the invention gives the caller the possibility to use the numbering scheme of their own country when dialling a telephone number. Thus, the customer need not necessarily know, for example, the country code of the destination country. The customer's use of a service based on the invention need not depend on their language skills. In addition, the service will operate in the same way in all countries, the short message being sent to the same number independently of the country. The service is also relatively fast, as the customer does not need to talk with a customer-service employee or listen to instructions for an automated service. Thus, the customer can be offered, for example, mobile connections between abroad and home, which are cheaper than conventional calls from abroad made using a mobile station. This advantage is due to the present GSM call charging practice, in which it is clearly (about 25 - 60 %) cheaper to receive calls to a GSM telephone abroad than it is to use a GSM telephone to make a call from abroad to the home country.

The method can also be used to resolve problems relating to account balance services. The term account balance service refers to a service, by means of which a customer is informed of the call charges that have accumulated to their account during a billing period. Customers who use account balance services experience the problem in the state of the art that the account balance service is not up to date. Information on GSM calls made from the home country is updated in an account balance service with a delay of about 2 - 3 days, so that the GSM subscriber remains informed of the growth of their telephone bill. Because GSM calls made abroad in a conventional manner and the related billing data are received by the GSM subscriber's own operator with a delay of two or even three weeks, in such cases the call balance service can no longer remain up to date. If the GSM subscriber uses their telephone particularly often abroad, the balance information service is of no practical benefit to them. When using the method based on the invention, a mobile operator can provide its customers with balance services that remain up to date, even in the case of connections made from abroad. The method based on the invention permits balance services to be updated with a delay of about 2 - 3 days, because the domestic mobile operator carries out the operations relating to billing.

The method can be applied in such a way that the mobile operator identifies a mobile subscriber who has sent a connection creation request, for example, on the basis of header data, or on the basis of the content of a short message. The mobile operator can then connect the call connection in such a way that the call's called subscriber is informed of the subscription number of the customer, i.e. the calling subscriber. The advantage of this embodiment is that, with the aid of the method, the customer can be provided with the opportunity to call service numbers from abroad too. The invention also permits calls to service numbers, because, with the aid of the invention, the entity maintaining the service number can be informed of the subscription number of the customer's mobile station. Billing can be carried out because a ticket made by the SSP on the SCP's command may be used as a basis for the billing in addition to the ticket made by the MSC. Thus, in a call going to a service provider, it is now possible to transmit the calling subscriber's number identity in a manner corresponding to that used in service number calls made in the home country. The display of the calling subscriber number identity can, however, be prevented, should this be necessary or mandatory due to the nature of the service in question. With the aid of the embodiment, a mobile subscriber who is abroad, for instance, can be provided with a possibility to contact such numbers, in which the origin number of incoming calls is checked and/or in which calls coming from unidentified numbers are blocked. Examples of such numbers are certain service numbers of banks. Because, through the embodiment, the called subscriber is informed of the calling subscriber number, the called subscriber can check from which subscription the call has originated. This is advantageous, for example, if an employee of a company who is travelling calls the company's office to ask about matters relating to some project. On the basis of the calling subscriber number, the office can ensure that the call has originated from the subscription of the company's employee, and not, for example, from the subscription of an industrial spy for a competing company.

The invention can be applied in such way that only specific mobile subscribers can contact a service number that is free or is subject to a charge. The service provider can, for instance, demand that the use of the service number requires registration, for example, by telephone, through the Internet, or in writing. The service provider can, for example, limit the use of the service number in such a way that only the service provider's own customers or own employees can utilize it. In that case, senders of a call creation request can be identified, for example, on the basis of the header data of a short message, or on the basis of the content of a short message.

The invention can, of course, also be applied in such a way that the sending of a connection creation request is subject to a charge, but the call connection itself is either free to the mobile subscriber, or subject to a specific tariff.

## Claims

1. A method for providing a service-number call to a mobile subscriber at a predefined tariff, which mobile subscriber has a mobile subscription agreement with a first mobile operator, the mobile subscriber having a mobile station (1) and the mobile station (1) having a network identifier, and wherein the mobile station is connected to a mobile network of a second mobile operator,
**characterized by**
- receiving, from the direction of the mobile subscriber, a connection creation request directed to an intelligent network telephone services, which connection creation request includes the network identifier of the mobile station (1) and information for defining a destination subscription,
- calling the mobile station (1) and opening a call connection to it,
- calling a terminal (15) associated with the destination subscription and opening a call connection to it,
- linking the opened call connections in such a way that a call connection is formed between the mobile station (1) and the terminal (15),
- determining the entity to be billed on the basis of the destination subscription, and
- billing at least part of the expenses relating to the call connection to the determined entity to be billed.

2. A method according to Claim 1, **characterized in that** the network identity is a telephone number.

3. A method according to either Claim 1 or 2, **characterized in that** the connection creation request is received in the form of, or through an SMS, Short Message Service, short message.

4. A method according to either Claim 1 or 2, **characterized in that** the connection creation request is received in the form of, or through a USSD, Unstructured Supplementary Service Data, message.

5. A method according to any of Claims 3 - 4, **characterized in that** the information for defining the destination subscription (15) appear in a contents field of the received message.

6. A method according to any of Claims 3 - 5, **characterized in that** the network identifier of the mobile station (1) of the mobile subscriber appears in a header field of the received message and/or in a contents field of the received message.

7. A method according to any of Claims 1 - 6, **characterized in that** information is sought concerning the location within the mobile network of the mobile station (1) of the mobile subscriber.

8. A method according to any of Claims 1 - 7, **characterized in that** the network identifier of the destination subscription (15) is retrieved from a database, with the aid of the information for determining the destination subscription (15), provided in the connection creation request.

9. A method according to any of Claims 1 - 8, **characterized in that** a suitable destination subscription (15) is selected with the aid of the location information of the mobile station (1) of the mobile subscriber and/or of the information provided in the connection creation request, for determining the destination subscription (15).

10. A method according to any of Claims 1 - 9, **characterized in that** the connection creation request is received by means of a data call or other data connection, for example, from a mobile station supporting WAP, Wireless Application Protocol, technology.

11. A method according to any of Claims 1 - 10, **characterized in that** the information provided to determine the destination subscription (15) includes predefined commands.

12. A method according to any of Claims 1-11, **characterized in that** the entity to be billed is the owner, possessor, and/or user of the destination subscription (15).

13. A method according to any of Claims 1 - 12, **characterized in that** information about the network identifier of the mobile station (1), from, which the connection creation request was sent is given to the terminal (15) associated with the destination subscription for identifying the mobile subscription.

14. A method according to any of Claims 1 - 13, **characterized in that** the information in the connection creation request for determining the destination subscription comprises a network identifies of the destination subscription.

15. A method according to any of Claims 1 - 14, **characterized in that** the entity to be billed is billed for at least part of the expenses of sending or presenting the connection creation request.

## Patentansprüche

1. Verfahren zum Bereitstellen eines Dienstnummernanrufs an einen mobilen Teilnehmer zu einem vordefinierten Tarif, wobei der mobile Teilnehmer eine mobile Subskriptionsvereinbarung mit einem ersten Mobilbetreiber hat, wobei der mobile Teilnehmer eine Mobilstation (1) hat und die Mobilstation (1) eine Netzwerkkennung hat, und wobei die Mobilstation mit einem Mobilnetz eines zweiten Mobilbetreibers verbunden ist. **gekennzeichnet durch**
- Empfangen einer Verbindungsaufbauanforderung aus der Richtung des mobilen Teilnehmers, die an einen intelligenten Netzwerktelefondienst gerichtet ist, wobei die Verbindungsaufbauanforderung die Netzwerkkennung der Mobilstation (1) und Informationen zum Definieren einer Zielsubskription enthält.
- Anrufen der Mobilstation (1) und Einrichten einer Rufverbindung zu ihr,
- Anrufen eines Endgeräts (15), das zu der Zielsubskription gehört, und Einrichten eines mit diesem verbindenden Rufs.
- Verbinden der eingerichteten Rufverbindungen in einer derartigen Weise, daß eine Rufverbindung zwischen der Mobilstation (1) und dem Endgerät (15) geschaffen wird.
- Bestimmen der Einheit, der die Rechnung gestellt werden soll, basierend auf der Zielsubskription, und
- Berechnen der bestimmten Einheit, der die Rechnung gestellt werden soll, zumindest eines Teils der Ausgaben in Bezug auf die Rufverbindung,

2. Verfahren nach Anspruch 1, **dadurch gekennzeichnet, daß** die Netzwerkkennung eine Telefonnummer ist.

3. Verfahren nach Anspruch 1 oder 2, **dadurch gekennzeichnet, daß** die Verbindungsaufbauanforderung in Form oder durch eine SMS-, Kurznachrichtendienst-, Nachricht empfangen wird.

4. Verfahren nach Anspruch 1 oder 2, **dadurch gekennzeichnet, dass** die Verbindungsaufhauanforderung in Form oder durch eine USSD- unstrukturierte Zusatzdienstdaten-, Nachricht empfangen wird.

5. Verfahren nach einem der Ansprüche 3 - 4, **dadurch gekennzeichnet, daß** die Informationen zum Definieren der Zielsubskription (15) in einem Inhaltsfeld der empfangenen Nachricht erscheinen.

6. Verfahren nach einem der Ansprüche 3 - 5, **dadurch gekennzeichnet, daß** die Netzwerkkennung der Mobilstation (1) des mobilen Teilnehmers in einem Anfangsblockfeld der empfangenen Nachricht und/oder in einem Inhaltsfeld der empfangenen Nachricht erscheint.

7. Verfahren nach einem der Ansprüche 1 - 6, **dadurch gekennzeichnet, daß** Informationen in Bezug auf den Standort des mobilen Teilnehmers innerhalb des mobilen Netzwerks der Mobilstation (1) gesucht werden.

8. Verfahren nach einem der Ansprüche 1 - 7, **dadurch gekennzeichnet, daß** die Netzwerkkennung der Zielsubskription (15) mit der Hilfe der Informationen zum Bestimmen der Zielsubskription (15), die in der Verbindungsaufbauanforderung bereitgestellt werden, aus einer Datenbank abgerufen wird.

9. Verfahren nach einem der Ansprüche 1 - 8, **dadurch gekennzeichnet, daß** eine passende Zielsubskription (15) mit der Hilfe der Standortinformationen der Mobilstation (1) des mobilen Teilnehmers und/oder der Informationen, die in der Verbindungsaufbauanforderung zum Bestimmen der zielsubskription (15) bereitgestellt werden, ausgewählt wird.

10. Verfahren nach einem der Ansprüche 1 - 9, **dadurch gekennzeichnet, daß** die Verbindungsaufbauanforderung mittels eines Datenanrufs oder einer anderen Datenverbindung, zum Beispiel von einer Mobilstation, die die WAP-, drahtlose Anwendungsprotokoll-, Technologie unterstützt, empfangen wird.

11. Verfahren nach einem der Ansprüche 1 - 10, **dadurch gekennzeichnet, daß** die Informationen, die bereitgestellt werden, um die Zielsubskription (15) zu bestimmen, vordefinierte Befehle umfassen.

12. Verfahren nach einem der Ansprüche 1 - 11, **dadurch gekennzeichnet, daß** die Einheit, der die Rechnung gestellt werden soll, der Eigentümer, Besitzer und/oder Nutzer der Zielsubskription (15) ist.

13. Verfahren nach einem der Ansprüche 1 - 12, **dadurch gekennzeichnet, daß** die Information über die Netzwerkkennung der Mobilstation (1) von der die Verbinduhgsaufbauanforderung gesendet wurde, an das Endgerät (15) gegeben wird, das zu der Zielsubskription gehört, um die mobile Subskription zu identifizieren.

14. Verfahren nach einem der Ansprüche 1 - 13, **dadurch gekennzeichnet, daß** die Informationen in der Verbindungsaufbauanforderung zum Bestimmen der Zielsubskription eine Netzwerkkennung der Zielsubskription aufweisen.

15. Verfahren nach einem der Ansprüche 1 - 14. **dadurch gekennzeichnet, daß** der Einheit, der die Rechnung gestellt werden soll, zumindest teilweise die Ausgaben des Sendens oder Darstellens der Verbindungsaufbauanforderung berechnet werden.

## Revendications

1. Procédé pour fournir un appel de numéro de service à un abonné mobile à un tarif prédéfini, lequel abonné mobile a un abonnement mobile avec un premier opérateur mobile, l'abonné mobile ayant une station mobile (1) et la station mobile (1) ayant un identifiant de réseau, et dans lequel la station mobile est connectée à un réseau mobile d'un deuxième opérateur mobile,
**caractérisé par** les étapes consistant à :
- recevoir, de la direction de l'abonné mobile, une demande de création de connexion dirigée vers un service téléphonique de réseau intelligent, laquelle demande de création de connexion comprend l'identifiant de réseau de la station mobile (1) et des informations pour définir un abonnement de destination,
- appeler la station mobile (1) et ouvrir une connexion d'appel vers celle-ci,
- appeler un terminal (15) associé à l'abonnement de destination et ouvrir une connexion d'appel vers cellui-ci,
- lier les connexions d'appel ouvertes de manière à ce qu'une connexion d'appel soit formée entre la station mobile (1) et le terminal (15),
- déterminer l'entité à facturer sur la base de l'abonnement de destination, et
- facturer au moins une partie des frais concernant la connexion d'appel à l'entité déterminée à facturer.

2. Procédé selon la revendication 1, **caractérisé en ce que** l'identifiant de réseau est un numéro de téléphone.

3. Procédé selon l'une ou l'autre des revendications 1 et 2, **caractérisé en ce que** la demande de création de connexion est reçue sous la forme ou par l'intermédiaire d'un SMS, service de messages courts.

4. Procédé selon l'une ou l'autre des revendications 1 et 2, **caractérisé en ce que** la demande de création de connexion est reçue sous la forme ou par l'intermédiaire d'un message USSD, Unstructured Supplementary Service Data.

5. Procédé selon l'une quelconque des revendications 3 et 4, **caractérisé en ce que** les informations pour définir l'abonnement de destination (15) apparaissent dans un champ de contenu du message reçu.

6. Procédé selon l'une quelconque des revendication 3 à 5, **caractérisé en ce que** l'identifiant de réseau de la station mobile (1) de l'abonné mobile apparaît dans un champ d'en-tête du message reçu et/ou dans un champ de contenu du message reçu.

7. Procédé selon l'une quelconque des revendications 1 à 6, **caractérisé en ce que** des informations concernant l'emplacement dans le réseau mobile de la station mobile (1) de l'abonné mobile sont recherchées.

8. Procédé selon l'une quelconque des revendications 1 à 7, **caractérisé en ce que** l'identifiant de réseau de l'abonnement de destination (15) est récupéré dans une base de données, à l'aide des informations pour déterminer l'abonnement de destination (15) fournies dans la demande de création de connexion.

9. Procédé selon l'une quelconque des revendications 1 à 8, **caractérisé en ce qu'**un abonnement de destination (15) approprié est sélectionné à l'aide des informations d'emplacement de la station mobile (1) de l'abonné mobile et/ou des informations fournies dans la demande de création de connexion, pour déterminer l'abonnement de destination (15).

10. Procédé selon l'une quelconque des revendications 1 à 9, **caractérisé en ce que** la demande de création de connexion est reçue au moyen d'un appel de données ou d'une autre connexion de données, par exemple, à partir d'une station mobile prenant en charge la technologie WAP, protocole d'application sans fil.

11. Procédé selon l'une quelconque des revendications 1 à 10, **caractérisé en ce que** les informations fournies pour déterminer l'abonnement de destination (15) comprennent des commandes prédéfinies.

12. Procédé selon l'une quelconque des revendications 1 à 11, **caractérisé en ce que** l'entité à facturer est le propriétaire, le possesseur, et/ou l'utilisateur de l'abonnement de destination (15).

13. Procédé selon l'une quelconque des revendications 1 à 12, **caractérisé en ce que** des informations concernant l'identifiant de réseau de la station mobile (1), à partir de laquelle la demande de création de connexion a été envoyée, sont données au terminal (15) associé à l'abonnement de destination pour identifier l'abonnement mobile.

14. Procédé selon l'une quelconque des revendications 1 à 13, **caractérisé en ce que** les informations dans la demande de création de connexion pour déterminer l'abonnement de destination comprennent un identifiant de réseau de l'abonnement de destination.

15. Procédé selon l'une quelconque des revendications 1 à 14, **caractérisé en ce que** l'entité à facturer est facturée pour au moins une partie des frais d'envoi ou de présentation de la demande de création de connexion.
